Europäisches Patentamt
European Patent Office
Office européen des brevets

(11) Publication number: **0 154 443 A2**

# (12) EUROPEAN PATENT APPLICATION

(21) Application number: 85301108.8

(22) Date of filing: 19.02.85

(51) Int. Cl.[4]: G 02 F 1/01
G 02 F 1/133, G 02 B 5/20
C 25 D 13/12

(30) Priority: 28.02.84 JP 36786/84

(43) Date of publication of application:
11.09.85 Bulletin 85/37

(84) Designated Contracting States:
DE FR GB NL

(71) Applicant: SEIKO INSTRUMENTS & ELECTRONICS LTD.
31-1, Kameido 6-chome
Koto-ku Tokyo(JP)

(72) Inventor: Kato, Naoki c/o Seiko Instruments
Electronics Ltd. 6-31-1, Kameido
Koto-ku Tokyo(JP)

(72) Inventor: Iwasa, Koji c/o Seiko Instruments
Electronics Ltd. 6-31-1, Kameido
Koto-ku Tokyo(JP)

(72) Inventor: Kamamori, Hitoshi c/o Seiko Instruments
Electronics Ltd. 6-31-1, Kameido
Koto-ku Tokyo(JP)

(72) Inventor: Suginoya, Mitsuru c/o Seiko Instruments
Electronics Ltd. 6-31-1, Kameido
Koto-ku Tokyo(JP)

(72) Inventor: Sano, Yutaka c/o Seiko Instruments
Electronics Ltd. 6-31-1, Kameido
Koto-ku Tokyo(JP)

(72) Inventor: Terada, Yumiko c/o Seiko Instruments
Electronics Ltd. 6-31-1, Kameido
Koto-ku Tokyo(JP)

(74) Representative: Caro, William Egerton et al,
J. MILLER & CO. Lincoln House 296-302 High Holborn
London WC1V 7JH(GB)

## (54) Colour member and method of manufacturing same.

(57) A colour member comprises a substrate (6), an electroconductive member (7) on the substrate and a coloured layer (8) on the electroconductive member. The electroconductive member consists of a first electroconductive layer (7a) on the substrate (6) and a second electroconductive layer (7b) on the first electroconductive layer. The second electroconductive layer is made of an electroconductive material resistant to the reaction products of electrolysis of water and has the coloured layer (8) thereon.

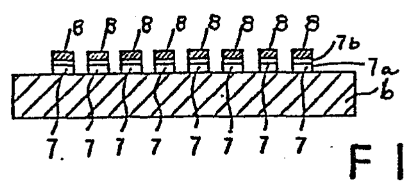


FIG. 2

EP 0 154 443 A2

# COLOUR MEMBER AND METHOD OF MANUFACTURING SAME

This invention relates to colour members, e.g. colour filters for multicolour display devices, and to methods of manufacturing the same.

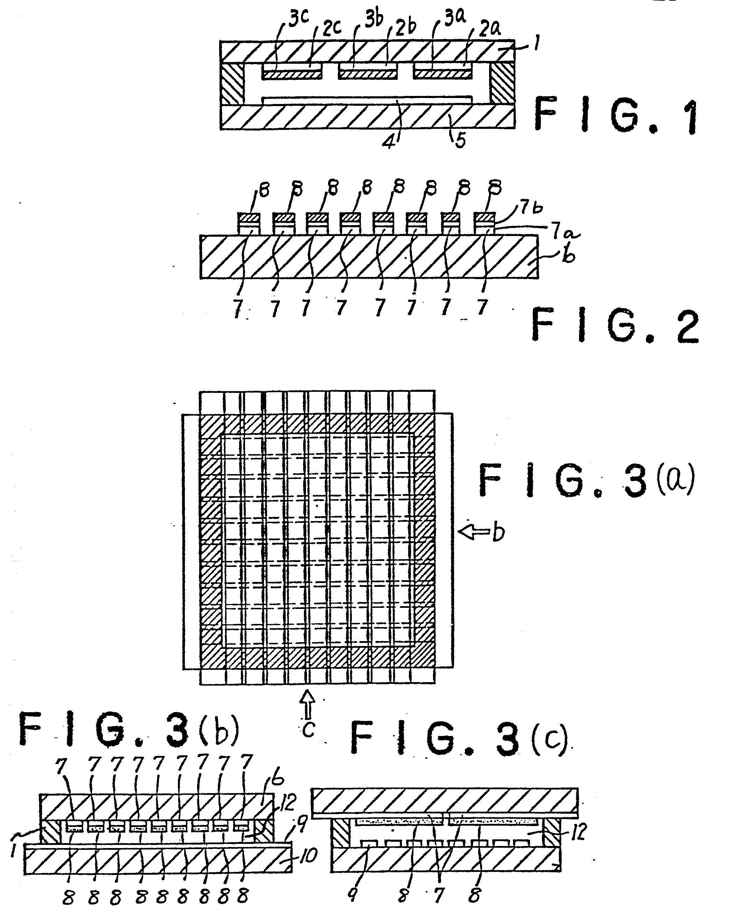

Figure 1 illustrates a conventional colour member forming a multicolour filter of a display device. In Figure 1, reference numeral 1 denotes a transparent substrate, reference numerals 2a, 2b, 2c denote display electrodes consisting of a transparent electroconductive film on which any desired figure or character is patterned, and reference numerals 3a, 3b, 3c denote colour layers formed on the surface of the display electrodes 2a, 2b, 2c, respectively in close contact therewith. The colour layers 3a, 3b, 3c act as colour filters. Reference numeral 4 denotes a transparent counter electrode and reference numeral 5 denotes a transparent substrate on which the counter electrode is formed. A material (not shown) which is caused to function as an optical shutter by an impressed voltage, such as a liquid crystal or an electrochromic material, fills the space defined between the two substrates 1,5. If the colour filters 3a, 3b, 3c are of different colours, a multicolour display can be provided by selectively applying voltages between the display electrodes 2a, 2b, 2c and the counter electrode 4.

A multicolour display device using colour filters is very effective in practice, because the method is simple, any colour display can be obtained relatively easily, and a variety of display materials can be employed in combination with a variety of display systems.

When manufacturing a multicolour display device using colour filters, however, care must be taken to prevent any displacement between the pattern of colour filters formed on the surface of the display electrodes and the pattern of the display electrodes.

Particularly, when a colour graphic display device using a fine pattern of three primary colours is to be constructed, a crucial problem, from the point of view of manufacture, concerns how to make the pattern of the display electrodes match that of the colour filters. Colour separation to achieve a multicolour display also results in a complicated manufacturing process, and, particularly when the colouring is performed by dyeing, a dye resist process must be used to prevent portions which have already been dyed being re-dyed, so that the dyeing process is complicated. In addition, this resist-dyeing technique itself has various problems depending upon the dye used.

Screen printing and photolithography are methods generally used for forming colour layers. Screen printing eliminates the necessity of resist-dyeing, but there is a limit to the miniaturisation of pattern that can be obtained. Therefore, the greater the number of colours, the lower the accuracy with which the pattern of colour filters is positioned, and the greater its displacement from the pattern of display electrodes. It is also difficult to produce shading of colours, particularly continuous colour shading.

Photolithography can provide a fine pattern, but the photolithographic process must be repeated for each colour with the necessity of additional resist-dyeing to prevent re-dyeing of portions already dyed. This makes the process so complicated that the merit of this simple colouring method is lost.

In their European Patent Application No. 83307818.1 the present applicants disclose colour filters formed by electrodeposition from a solution in which an electrodepositable polymer and a dye or pigment is dispersed. Although simple, this method does not suffer from the problem of pattern displacement even when the pattern is highly miniaturised, and can be used to produce economically a multicolour surface member with a high colour fastness, without the necessity of any specific resist process when the colours are

changed. If a material which is electrochemically unstable, such as indium oxide ($In_2O_3$), is used for the display electrodes on which the colour filters are formed, an oxidation-reduction reaction takes place on the surface, so that a uniform colour filter cannot be obtained. As a result of studies, it has been discovered that a uniform colour filter can be formed on a display electrode of tin oxide ($SnO_2$), but a voltage drop occurs because the volumetric electrical resistance of $SnO_2$ is high. Particularly in a display device driven by time sharing at relatively high frequency, the magnitude of this voltage drop varies according to distance from a lead terminal, and this has an adverse effect on display quality. In principle, the thickness of the $SnO_2$ film can be reduced to reduce its electrical resistance, but this greatly reduces the permeability of the display electrode.

According to one aspect of the present invention there is provided a colour member comprising a substrate, an electroconductive member on said substrate and a coloured layer on the electroconductive member characterised in that the electroconductive member consists of a first electroconductive layer on the substrate and a second electroconductive layer on said first electroconductive layer, the second electroconductive layer being made of an electroconductive material resistant to the reaction of products of the electrolysis of water and having the coloured layer thereon.

Said colour layer may be formed by electrodepositing colouring material on the second electroconductive layer. Thus said colour layer may be formed by electrodepositing colouring material and a polymer on the second electroconductive layer.

Said second electroconductive layer preferably is made of at least one of tin oxide, antimony oxide, zinc oxide, cadmium oxide, gallium oxide, germanium oxide, gold, silver, nickel, aluminium and silicon.

Said first and second electroconductive layers may be light transmissive. Preferably said first electroconductive layer

has an electrical resistance lower than that of the second electroconductive layer.

In the preferred embodiment said first electroconductive layer is made of indium oxide.

According to a further aspect of the present invention there is provided a method of manufacturing a colour member comprising the steps of: forming electroconductive members on a substrate and colouring selective electroconductive members different colours by electrodepositing colouring material and a polymer to form coloured layers characterised in tha tthe electroconductive members are formed by a first electroconductive layer on the substrate and a second electroconductive layer made of an electroconductive material resistant to the reaction products of the electrolysis of water, the coloured layers being electrodeposited on the second electroconductive layers.

Said colouring matter may be water-insoluble. Said colouring matter may be a pigment, a dispersion dye or a solvent dye.

The coloured layers may be composed of a mixture of an electrodeposition polymer and colouring material, the electrodeposition polymer being a negatively charged polymer.

According to a further aspect of the present invention there is provided a colour member comprising a substrate, a first electroconductive layer on said substrate, a second electroconductive layer on said first electroconductive layer, the second electroconductive layer being made of an electroconductive material resistant to the reaction according to the electrolysis of water, and a coloured layer on the second electroconductive layer.

According to yet another aspect of the present invention there is provided a method for manufacturing a colour member comprising the steps of: forming a first electroconductive layer on a substrate, forming a second electroconductive layer resistant to the reaction according to the electrolysis of water on said first electroconductive layer, and forming a coloured layer on

said second electroconductive layer by electrodespositing a colouring material and polymer on said second electroconductive layer.

According to a still further aspect of the present invention there is provided a method for manufacturing a multicolour member comprising the steps of: forming first electroconductive layers on a substrate, forming second electroconductive layers resistant to the reaction according to the electrolysis of water on said first electroconductive layers, and forming the coloured layers of different colours on said second electroconductive layers by electrodepositing colouring material and polymer on said second electroconductive layers.

The invention is illustrated, merely by way of example, in the accompanying drawings, in which:-

Figure 1 is a schematic sectional view of a display device with a conventional colour member;

Figure 2 is a schematic sectional view of a colour member according to the present invention;

Figure 3(a) is a plan view of a display device with the colour member of Figure 2; and

Figure 3(b) and 3(c) are schematic sectional views of the display device of Figure 3(a), viewed from directions "b" and "c", respectively.

In order to reduce the electrical resistance of an electroconductive layer and to obtain a colour filter with a uniform surface by electrodeposition, the electroconductive layer of a colour member according to the present invention, has a multilayered structure, an upper layer being made of an electroconductive material resistant to the reaction products of the electrolysis of water, e.g. tin oxide ($SnO_2$), antimony oxide ($Sb_2O_3$), zinc oxide (ZnO), cadmium oxide (CdO), gallium oxide ($Ga_2O_3$), germanium oxide ($GeO_2$), gold (Au), silver (Ag), nickel (Ni), aluminium (Al) or silicon (Si), and a lower layer having a relatively low electrical resistance.

EXAMPLE 1

Figure 2 is a section of a colour member according to the present invention. Each of a plurality of display electrodes 7 on a substrate 6 consists of a lower layer 7a of indium oxide ($In_2O_3$) and an upper layer 7b of tin oxide ($SnO_2$). A colour filter 8 is formed on each of the upper layers 7b. Figure 3(a), 3(b) and 3(c) illustrate a display device having the colour member of Figure 2.

Initially, the lower layer 7a of indium oxide is formed by sputtering to a thickness of about 800 Å . The upper layer 7b of tin oxide is then formed over the lower layer by chemical vapour deposition (CVD) to a thickness of about 500 Å. The drop in permeability resulting from this two-layered structure is much smaller than that when solely a layer of tin oxide with an equivalent sheet resistance is used.

The display electrodes 7 are patterned so that they can be used as electrodes in an electrodeposition bath having the composition set out below, prepared using a paint ("S-Via ED-3000", a product of Jinto Paint K.K.).

| Material | Weight Ratio |
|---|---|
| "S-Via ED-3000" | 5 |
| Water | 120 |
| Methylcellosolve | 15 |
| Oil-soluble dye | X |

S-Via ED-3000 has the composition:

| | |
|---|---|
| Water-soluble polyester resin<br>Water-soluble melamine resin | ....... 70% by weight |
| Butylcellosolve<br>Ethylcellosolve<br>n-butanol | ....... 30% by weight |

The oil-soluble dyes that can be used are limited to those which are soluble in hydrophilic solvents. They preferably have

a metal complex salt structure with an extremely high degree of light-fastness. An example of such an oil-soluble dye (trade names: "Aizen Spilon", "Oleosol Fast", etc.,), has the following structure:

Cr complex salt of

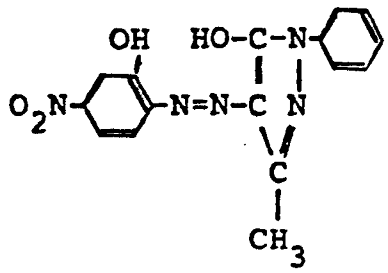

(color index number: Solvent Red 8)

The electrodeposition bath was prepared in the following manner: "S-Via ED-3000" was dissolved in water; the dye was dissolved in the methylcellosolve, the amount of dye x being freely chosen within a range not exceeding the solubility of the dye in methylcellosolve; and the methylcellosolve in which the dye was dissolved was added to the aqueous solution and uniformly dispersed. The methycellosolve acted as a dispersion medium, but if the quantity added is too great, or if the number of carbom atoms in the alkyl group of the cellosolve is increased, the film thickness increases and the film deposited is non-uniform.

The substrate 6, on which the display electrodes 7 are formed, was immersed in the electrodeposition bath prepared in the manner described above. The display electrodes 7 were in strip form, and a group of electrodes to be coloured identically were selected, and a voltage of 10V was applied for 3 minutes using the selected group of display electrodes as the anode. A large current flowed immediately after the application of the voltage,

but the current gradually reduced approaching zero. After the application of the voltage, the substrate 6 was removed from the bath and was well washed in water to remove the solution deposited onto the display electrodes 7 to which no voltage was applied. After being washed with water, the electrodes were dried, and it was found that a transparent coloured layer was formed on the display electrodes to which the voltage had been applied.

The polyester resin and the melamine resin in the electrodeposited coloured layer were next subjected to a polycondensation reaction and were cured by baking. The coloured layer was completely cured by baking effected at 175°C for 30 minutes in air. In this case, the thickness of the coloured layer was 1.5μm.

The cured coloured layer was found to be a completely electrically insulating layer which could not have a further layer electrodeposited thereon even when the substrate was again immersed in the electrodeposition bath and the voltage applied. Second and subsequent coloured layers were formed by repeating the process of selecting a second group of display electrodes to be coloured identically, electrodepositing a coloured layer on these display electrodes in a similar electrodeposition bath in which dye of a different colour had been added, and curing.

In this embodiment, colour filters 8 of 200μm wide strips of red, blue and green were manufactured by the following extremely simple method: patterning, electrodeposition of a red filter, curing, electrodeposition of a blue filter, curing, electrodeposition of a green filter and curing. The colour filters thus obtained were completely free from colour displacement, were uniform and were resistant to acid, alkali, various organic solvents, and hot water. The metal complex salt dyes used in the colour filters were found to be extremely stable and have an extremely high degree of light-fastness, and exhibited a light absorption of at least 95% of the initial value even 360 hours in a carbon arc test.

The colour filters 8 were formed on the display electrodes 7 by the method described above. The display substrate 6 was disposed opposite to a transparent counter substrate 10 on which transparent counter electrodes 9 had been formed in a strip pattern with a spacer 11 between the substrates 6, 10. The display electrodes 7 faced the counter electrodes 9 and the direction of the strips of the two were at right angles. A TN-FEM (twisted nematic field effect mode) liquid crystal display material 12 was disposed into the space between the substrates to form a display cell. The display cell was sandwiched between a polariser and an analyser whose transmission axes were parallel. When a voltage was applied between the display electrodes 7 and the counter electrodes 9, the colours of the transparent colour filters 8 were displayed when viewed either from the direction of the substrate 6 or from the direction of the counter substrate 10. The display cell appeared black when no voltage was applied. When light was incident on the counter substrate 10, the colours of the colour filters 8 were displayed vividly due to the excellent transparency of the display cell.

Since the display electrodes 7 consisted of a layer of indium oxide with a layer of tin oxide formed thereon, the coloured filters 8 had a uniform surface without any drop in transmissivity, and a display cell with a low-resistance electroconductive film was obtained.

The multicolour display device of this example is simple in construction, can be driven with a low voltage, exhibits only a limited power consumption, has a high display quality and a high reliability.

EXAMPLE 2

A pigment was used in place of the oil-soluble dye in the electrodeposition bath of Figure 1, and electrodeposition was carried out as described in that Example. Uniform colour filters were obtained. A multicolour display device was constructed

in the same way as in Example 1 except that the display material 12 was replaced by a negative type of guest-host liquid crystal material using black dichroic colouring matter, and a white material (white ceramic) served as the display substrate 6. When a voltage was applied between the display electrodes 7 and the counter electrodes 9 and when viewing from the direction of the transparent counter substrate 10 through a polariser, the colours of the colour filters 8 were displayed brightly. When no voltage was applied, the colour of the dichroic colouring matter, namely black, was displayed. Effects substantially the same as those achieved in Example 1 were obtained.

EXAMPLE 3

In place of the upper layer of tin oxide, a layer of any one or more of antimony oxide, zinc oxide, cadmium oxide, gallium oxide, germanium oxide, a thin layer of gold, a thin layer of silver, a thin layer of nickel, a thin layer of aluminium or a thin layer of silicon was used, and electrodeposition of colour filters was carried out in a similar way to that described in Example 1. Uniform colour filters were obtained. Using the colour filters, a multicolour display device was constructed in the same way as in Example 1, and substantially the same effects were achieved.

The colour members according to the present invention and described above consist of uniform colour filters on electroconductive layers with a low electrical resistance. A display device using colour members according to the present invention is, for example, suitable for a time-sharing colour display device.

CLAIMS

1. A colour member comprising a substrate (6), an electroconductive member (7) on said substrate and a coloured layer (8) on the electroconductive member (7) characterised in that the electroconductive member (7) consists of a first electroconductive layer (7a) on the substrate (6) and a second electroconductive layer (7b) on said first electroconductive layer (7a), the second electroconductive layer (7b) being made of an electroconductive material resistant to the reaction of products of the electrolysis of water and having the coloured layer (8) thereon.

2. A colour member as claimed in claim 1 characterised in that said coloured layer (8) is formed by electrodepositing colouring material on the second electroconductive layer (7b).

3. A colour member as claimed in claim 1 characterised in that said coloured layer is formed by electrodepositing colouring material and a polymer on the second electroconductive layer (7b).

4. A colour member as claimed in any preceding claim characterised in that said second electroconductive layer (7b) is made of at least one of tin oxide, antimony oxide, zinc oxide, cadmium oxide, gallium oxide, germanium oxide, gold, silver, nickel, aluminium and silicon.

5. A colour member as claimed in any preceding claim characterised in that said first and second electroconductive layers (7a, 7b) are light transmissive.

6. A colour member as claimed in any preceding claim characterised in that said first electroconductive layer (7a) has an electrical resistance lower than that of the second electroconductive layer (7b).

7. A colour member as claimed in any preceding claim characterised in that said first electroconductive layer (7a) is made of indium oxide.

8. A method of manufacturing a colour member comprising the steps of: forming electroconductive members (7) on a substrate (6) and colouring selective electroconductive members different colours by electrodepositing colouring material and a polymer to form coloured layers (8) characterised in that the electroconductive members (7) are formed by a first electroconductive layer (7a) on the substrate (6) and a second electroconductive layer made of an electroconductive material resistant to the reaction products of the electrolysis of water, the coloured layers being electrodeposited on the second electroconductive layers.

9. A method as claimed in claim 8 characterised in that said colouring material is water-insoluble.

10. A method as claimed in claim 8 or 9 characterised in that said colouring material is a pigment, a dispersion dye or a solvent dye.

11. A method as claimed in any of claims 8 to 10 characterised in that the coloured layers are composed of a mixture of an electrodeposition polymer and colouring material, the electrodeposition polymer being a negatively charged polymer.

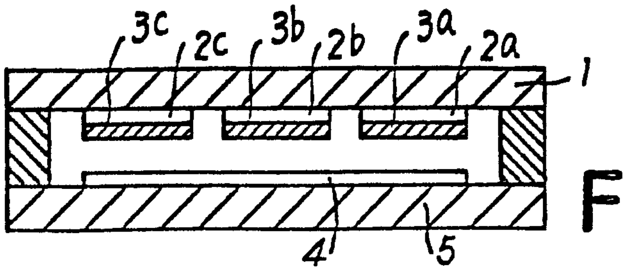


FIG. 1

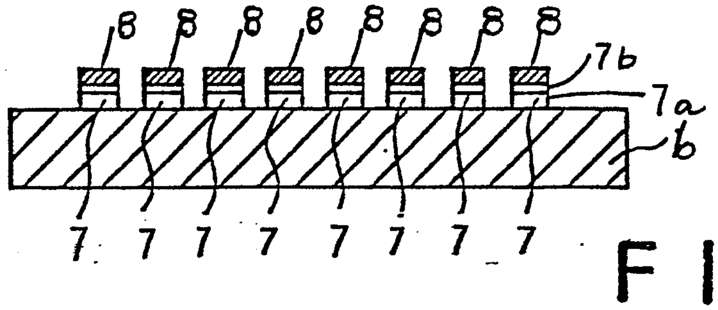


FIG. 2

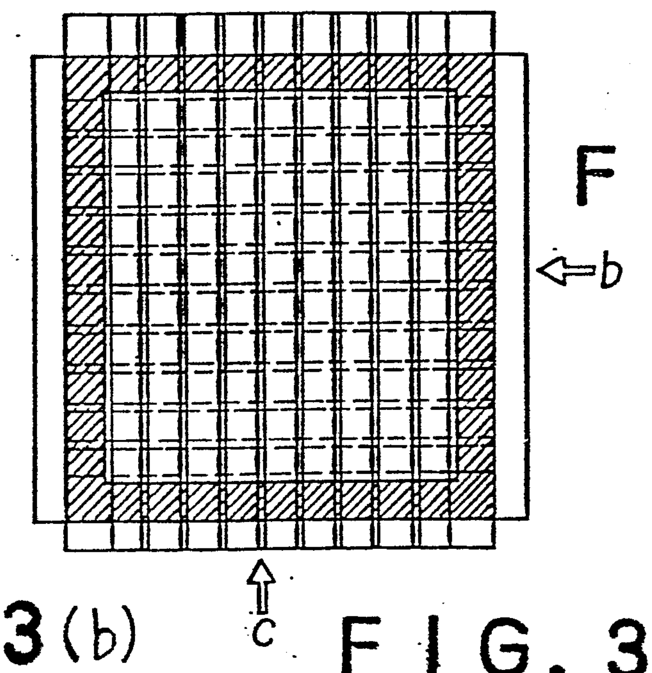


FIG. 3(a)

FIG. 3(b)

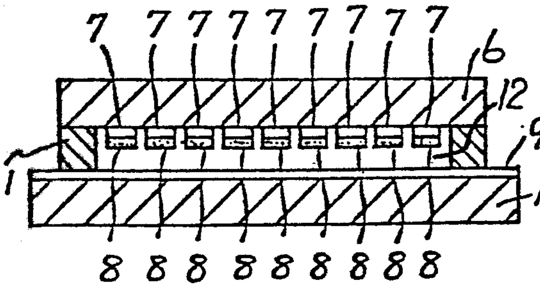


FIG. 3(c)